# EUROPEAN PATENT SPECIFICATION

(11) **EP 3 407 458 B1**
(45) Date of publication and mention of the grant of the patent: **09.09.2020**
(21) Application number: 18275071.1
(22) Date of filing: 25.05.2018
(51) Int. Cl.: H02J 7/00

(54) **METHOD AND DEVICE FOR IDENTIFYING MASTER AND SLAVE BATTERY PACKS**
VERFAHREN UND VORRICHTUNG ZUR IDENTIFIZIERUNG VON MASTER- UND SLAVE-BATTERIEPACKS
PROCÉDÉ ET DISPOSITIF POUR IDENTIFIER DES BLOCS BATTERIE MAÎTRES ET ESCLAVES

(30) Priority: 26.05.2017 CN 201710385335; 24.05.2018 US 201815988254
(43) Date of publication of application: 28.11.2018
(60) Divisional application: 20183294.6
(73) Proprietor: Contemporary Amperex Technology Co., Limited, Jiaocheng District Ningde City Fujian 352100 (CN)
(72) Inventor: WEI, Zhili, Ningde City, Fujian 352100 (CN)
(74) Representative: Williams Powell

(56) References cited:
- GB-A- 2 494 187
- US-A1- 2016 359 329

## Description

### CROSS-REFERENCE TO RELATED APPLICATION(S)

This application claims the benefit of Chinese Patent Application No. CN201710385335.3, entitled "METHOD AND DEVICE FOR IDENTIFYING MASTER AND SLAVE BATTERY PACKS " and filed on May 26, 2017 in the State Intellectual Property Office of the People's Republic of China (PRC) (SIPO), and U.S. Patent Application No. 15/988,254, entitled "METHOD AND DEVICE FOR IDENTIFYING MASTER AND SLAVE BATTERY PACKS" and filed on May 24, 2018.

### BACKGROUND

### Field

The present invention relates to the technical field of energy storage system, and in particular to a method and device for identifying master and slave battery packs.

### Background

Energy storage technology with lithium ion batteries is rapidly evolving. Lithium energy storage applications range from small, portable, personal energy storages (such as a mobile phone's auxiliary back-up power supplies), to mid-sized home energy storages used to store the green energies generated by windmills or solar panels, to large-scale enterprise or public-level energy storages used for various applications.

Large-capacity lithium ion battery energy storage systems typically employ a plurality of independent battery cabinets that are connected in series or in parallel. When the plurality of independent battery cabinets are connected in parallel, a battery pack may be connected to each of the battery cabinets. When the battery cabinets are in operation, a master battery pack may be used to coordinate the operations of the plurality of battery packs, as well as to communicate information with exterior systems.

GB 2494187 discloses a battery management system, method and battery.

US 2016/0359329 A1 discloses a battery control system and method.

### SUMMARY

One or more embodiments of the present application provide a method and device for identifying master and slave battery packs. A number of preferred embodiments are described in the following paragraphs. Features of these embodiments can be combined and interchanged in any combination. A battery cabinet is preferably able to determine the master battery pack and slave battery packs by itself, thereby improving the configuration of the master battery pack and slave battery packs in the battery cabinet.

According to an aspect of the present invention, there is provided a method for identifying a master battery pack according to claim 1. The method includes a first battery pack obtaining an identifier of the first battery pack after the first battery pack is connected to a battery cabinet. The method includes the first battery pack identifying itself as the master battery pack if/when, after the first battery pack is connected to the battery cabinet, the first battery pack does not obtain identifiers of one or more other battery packs through a communication bus.

In one embodiment, the method also includes the first battery pack obtaining identifiers of one or more other battery packs in their respective battery cabinets through the communication bus. The number of the one or more other battery packs plus the first battery pack is N, where N is a positive integer. The method further includes the first battery pack sorting the identifier of the first battery pack and the identifiers of the one or more other battery packs to obtain a sorted result. The method further includes the first battery pack identifying the master battery pack and one or more slave battery packs among the first battery pack and the one or more other battery packs according to the sorted result.

In one embodiment, the master battery pack controls the operations of the one or more slave battery packs.

In one embodiment, the identifier of the first battery pack and the identifiers of the one or more other battery packs are each a unique address code; or the identifier of the first battery pack and the identifiers of the one or more other battery packs are each a unique serial number.

In one embodiment, the first battery pack sorting the identifier of the first battery pack and the identifiers of each of the one or more other battery packs includes sorting all of the identifiers according to an ascending order of all of the identifiers to obtain the sorted result, or sorting all of the identifiers according to a descending order of all of the identifiers to obtain the sorted result.

In one embodiment, the first battery pack identifying the master battery pack and the one or more slave battery packs among the first battery pack and the one or more other battery packs includes identifying the battery pack with the largest identifier as the master battery pack, and other battery packs as the slave battery packs according to the sorted result; or identifying the battery pack with the smallest identifier as the master battery pack, and other battery packs as the slave battery packs according to the sorted result.

The method includes the first battery pack detecting that the master battery pack is removed from its battery cabinet, detecting that a new battery pack is not connected to any of the battery cabinets within a time period after the master battery pack is removed, and identifying a new master battery pack and new slave battery packs according to the sorted result.

In one embodiment, the first battery pack identifying the new master battery pack and the new slave battery packs according to the sorted result includes identifying the battery pack with the largest identifier excluding the removed master battery pack as the new master battery pack, and all other battery packs as the new slave battery packs according to the sorted result, or identifying the battery pack with the smallest identifier excluding the removed master battery pack as the new master battery pack, and all other battery packs as the new slave battery packs according to the sorted result.

According to an aspect of the present invention, there is provided a method for identifying a new master battery pack and new slave battery packs according to claim 7. The method includes an i^{th} one of a plurality of first battery packs detecting that a master battery pack is removed from a battery cabinet, where i ranges from 1 to N. N is a positive integer, where N is the total number of the first battery packs connected to their respective battery cabinets. The plurality of the first battery packs have their respective identifiers. The method includes the i^{th} one of the first battery packs detecting that a new battery pack is connected to one of the battery cabinets within a time period after the master battery pack is removed. The method also includes the i^{th} one of the first battery packs obtaining an identifier of the new battery pack. The method further includes the i^{th} one of the first battery packs sorting the identifiers of the first battery packs and the identifier of the new battery pack to obtain a sorted result. The method further includes the i^{th} one of the first battery packs identifying the new master battery pack and the new slave battery packs among the first battery packs and the new battery pack according to the sorted result.

In one embodiment, the identifiers of the first battery packs and the identifier of the new battery pack are each a unique address, or the identifiers of the first battery packs and the identifier of the new battery pack are each a unique serial number.

In one embodiment, the i^{th} one of the first battery packs identifying the new master battery pack and the new slave battery packs includes identifying the battery pack with the largest identifier as the new master battery pack, and the other battery packs as the new slave battery packs according to the sorted result, or identifying the battery pack with the smallest identifier as the new master battery pack, and the other battery packs as the new slave battery packs according to the sorted result.

One or more embodiments of the present invention further provide a device for identifying a master battery pack. The device is arranged in a first battery pack, and includes an obtaining module configured to obtain an identifier of the first battery pack after the first battery pack is connected to a battery cabinet. The device also includes an identifying module configured to identify the first battery pack as a master battery pack if/when, after the first battery pack is connected to the battery cabinet, the first battery pack does not obtain identifiers of one or more other battery packs through a communication bus.

In one embodiment, the obtaining module is further configured to obtain identifiers of one or more other battery packs in their respective battery cabinets through the communication bus. The number of the one or more other battery packs plus the first battery pack is N, wherein N is a positive integer. The device also includes a sorting module configured to sort the identifier of the first battery pack and the identifiers of the one or more other battery packs to obtain a sorted result. The identifying module is further configured to identify the master battery pack and one or more slave battery packs among the first battery pack and the one or more other battery packs according to the sorted result.

In one embodiment, the identifier of the first battery pack and the identifiers of the one or more other battery packs are each a unique address; or the identifier of the first battery pack and the identifiers of the one or more other battery packs are each a unique serial number.

In one embodiment, the sorting module is further configured to sort all of the identifiers according to an ascending order of all of the identifiers to obtain the sorted result, or to sort all of the identifiers according to a descending order of all of the identifiers to obtain the sorted result.

In one embodiment, the identifying module is further configured to identify the battery pack with the largest identifier as the master battery pack, and other battery packs as the slave battery packs according to the sorted result, or to identify the battery pack with the smallest identifier as the master battery pack, and other battery packs as the slave battery packs according to the sorted result.

In one embodiment, the identifying module is further configured to detect that the master battery pack is removed from its battery cabinet, to detect that a new battery pack is not connected to any of the battery cabinets within a time period after the master battery pack is removed, and to identify a new master battery pack and new slave battery packs according to the sorted result.

In one embodiment, the identifying module is further configured to identify the battery pack with the largest identifier excluding the removed master battery pack as the new master battery pack, and all other battery packs as the new slave battery packs according to the sorted result, or to identify the battery pack with the smallest identifier excluding the removed master battery pack as the new master battery pack, and all other battery packs as the new slave battery packs according to the sorted result.

In one embodiment, the obtaining module is further configured to detect that the master battery pack is removed from the battery cabinet of the master battery pack. The obtaining module is further configured to detect that a new battery pack is connected to one of the battery cabinets within a time period after the master battery pack is removed, and to obtain an identifier of the new battery pack. The sorting module is further configured to sort all of the identifiers including the identifier of the new battery pack to obtain a sorted result. The identifying module is further configured to identify the new master battery pack and the new slave battery packs among all of the battery packs including the new battery pack according to the sorted result.

In one embodiment, the identifiers of the all of the battery packs including the identifier of the new battery pack are each a unique address, or the identifiers of all of the battery packs including the identifier of the new battery pack are each a unique serial number. According to an aspect of the present invention there is provided a device according to claim 10.

Embodiments of the present application provide a method and device for identifying a master battery pack and slave battery packs. After a first battery pack is connected to a battery cabinet, the first battery pack obtains its own identifier. If the first battery pack obtains identifiers of other battery packs in their respective battery cabinets through a communication bus, the first battery pack, according to the sorted result of the identifiers of all the battery packs, identifies the master battery pack and the slave battery packs among the first battery pack and the other battery packs. If the first battery pack does not obtain the identifiers of any other battery packs in their battery cabinets through the communication bus, the first battery pack identifies itself as the master battery pack. According to the technical solution provided in the embodiments of the present application, each of the battery packs connected to their respective battery cabinet is preferably able to automatically identify a master battery pack and slave battery packs according to the identifiers of the battery packs. The solution does not require a user to manually configure the battery packs one by one. Thus, the complexity of the operation is reduced, and the efficiency of configuration is improved. In this way, embodiments of the present application address the shortcomings in the existing technology of requiring a user to manually configure battery packs one by one, thereby avoiding the complicated and time-consuming configuration process and the resulting low configuration efficiency.

### BRIEF DESCRIPTION OF THE DRAWINGS

In order to more clearly describe the technical solutions of the one or more embodiments of the present applications, the drawings for the one or more embodiments will be briefly described below. It is understood that the drawings accompanied by the detailed description set forth below represent only some embodiments of the present application. A person of ordinary skill in the art may readily derive other drawings on the basis of these drawings without inventive skills and these drawings would still be encompassed within the scope of the disclosure of the present application.

The invention is defined by independent claims 1, 7 and 10.
Figure 1 is an exemplary flow chart of a first method for identifying a master battery pack and slave battery packs provided by one or more embodiments of the present application.
Figure 2 is a schematic view of the structure of the battery cabinet provided by one or more embodiments of the present application.
Figure 3 is an exemplary flow chart of a second method for identifying a master battery pack and slave battery packs provided by one or more embodiments of the present invention.
Figure 4 is a functional block diagram of a system for identifying a master battery pack and slave battery packs provided by one or more embodiments of the present invention.

### DETAILED DESCRIPTION

In order to allow a better understanding of the technical solutions of the present application, various embodiments of the present application will be described in detail below with reference to the accompanying drawings. It should be understood that the embodiments described herein represent only some embodiments of the present application and that the innovative aspects of the present application may be embodied in many different forms. Other embodiments may be readily apparent to a person of ordinary skill in the art on the basis of the embodiments described herein.

The terms used in the one or more embodiments of the present application are provided for the purpose of illustrating the embodiments only and are not intended to limit the present application. For example, the singular forms "a," "an," and "this," and others used in the one or more embodiments of the present application and the appended claims are intended to include the plural forms unless the context clearly dictates otherwise.

In existing technology, the determination of the master battery pack and the slave battery packs in a battery cabinet may require a user to manually configure them one by one. The operation is complicated and time-consuming. In addition, the configuration efficiency is relatively low. Embodiments of the present application provide a method and a system for configuring a master battery pack and slave battery packs automatically.

### Embodiment I

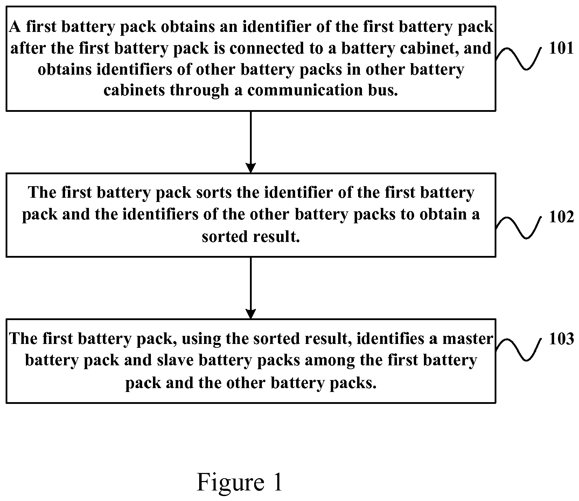

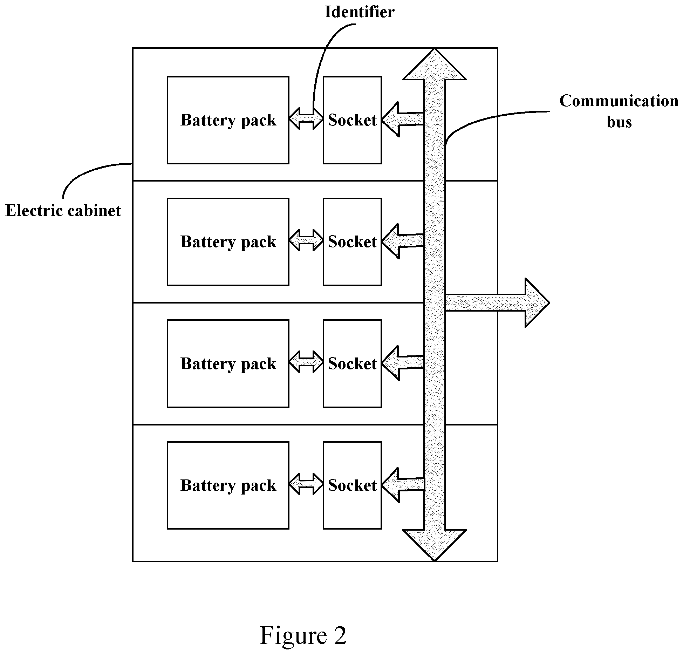

Figure 1 is an exemplary flow chart of a first method for identifying a master battery pack and slave battery packs provided by one or more embodiments of the present application. Figure 2 is a schematic view of the structure of the battery cabinet provided by one or more embodiments of the present application. As shown in Figures 1 and 2, the method for identifying the master battery pack and slave battery packs in accordance with the embodiments includes the steps or blocks described herein.

In block 101, a first battery pack obtains an identifier of the first battery pack after the first battery pack is connected to a battery cabinet. The first battery pack may obtain identifiers of other battery packs in other battery cabinet through a communication bus. In one or more embodiments of the present application, the number of the other battery packs is N, and N is a positive integer.

As shown in Figure 2, in one or more embodiment of the present application, each battery cabinet has a socket or an interface through which the battery pack is connected to the battery cabinet. The battery cabinet is also provided with a communication bus used for communicating with other battery cabinets, as well as for communicating with systems outside of the battery cabinet.

In one or more embodiments of the present application, each battery cabinet may be populated by connecting to a battery pack or may be unpopulated by not connecting to a battery pack. The socket or the interface in each battery cabinet may be configured with an identifier. The identifier may be provided through an address line in the socket or the interface, and the identifier may be obtained by the battery pack. It is understood that the number of identifiers may vary with the number of battery cabinets.

Through the communication bus, each battery cabinet may broadcast a message when it has been connected with a battery pack and may receive broadcast messages from other battery cabinets to learn if each battery cabinet has been connected with a battery pack. In one or more embodiments of the present application, a first battery pack may refer to any battery pack connected to a battery cabinet, and correspondingly, other battery packs may refer to any other battery packs connected to the other battery cabinets except the first battery pack.

For example, a power cabinet may provide four battery cabinets, and each battery cabinet may be connected with a battery pack. In such case, one of the battery packs may be referred to as the first battery pack, and the remaining three battery packs may be referred to as the other battery packs.

After the first battery pack is connected to a battery cabinet, the first battery pack may use an address provided by the address lines in the socket as its own identifier. The first battery pack may broadcast its identifier via the communication bus to the other battery packs. Correspondingly, after each of the other battery packs is connected to its respective battery cabinet, each of the other battery packs may use the address provided by the address lines in the respective socket as its own identifier. Each of the other battery packs may broadcast its identifier via the communications bus to the first battery pack and all other battery packs. It is understood that each battery pack in the power cabinet may know each other's identifiers.

In one embodiment, the identifier of the first battery pack and the identifiers of each of the other battery packs are unique addresses. In another embodiment, the identifier of the first battery pack and the identifiers of each of the other battery packs are unique serial numbers. For example, the addresses may be 0X00, 0X01, etc., or A01, A02, etc. The serial numbers may be No. 1, No. 2, etc.

For example, four battery cabinets may be provided in a power cabinet, and the addresses of the battery cabinets may be 0X00, 0X01, 0X02 and 0X03, respectively. In such case, the identifier of the battery pack connected to the battery cabinet with address 0X00 is 0X00, and the identifier of the battery pack connected to the battery cabinet with address 0X01 is 0X01, and so on.

In another embodiment, a power cabinet may be provided with eight battery cabinets. The serial numbers of the battery cabinets may be from No. 1 to No. 8. In such case, the identifier of the battery pack connected to the battery cabinet with serial No. 1 is No. 1, the identifier of the battery pack connected to the battery cabinet with serial No. 2 is No. 2, and so on.

In block 102, the first battery pack sorts the identifier of the first battery pack and the identifiers of each of the other battery packs, and obtains a sorted result. For example, after obtaining its own identifier, as well as the identifiers of each of the other battery packs via the communication bus, the first battery pack sorts the identifiers according to a preset sorting rule to obtain a corresponding sorted result. In one embodiment, the first battery pack may sort the identifiers according to an ascending order of the identifiers. In another embodiment, the first battery pack may sort the identifiers according to a descending order of the identifiers.

It is understood that while only two sorted results of the identifiers are described in one or more embodiments of the present application, other sorted results may be obtained in accordance with the requirements of different power cabinets. Therefore, the sorting rules are not limited to those for obtaining the two sorted results provided in the embodiments of the present application.

In an embodiment, the first battery pack may put its own identifier first in the sorted result to represent itself, and then put the sorted result obtained from applying the sorting rule to the identifier of the first battery pack and the identifiers of all the other battery packs next. Correspondingly, each of the other battery packs, in the sorting step, may put its own identifier first in the sorted result to represent itself, and then put the sorted result obtained from applying the sorting rule to the identifier of the first battery pack and the identifiers of all the other battery packs after its own identifier.

For example, there may be four battery cabinets provided in a power cabinet. The addresses of the four battery cabinets may be 0X00, 0X01, 0X02, and 0X03 in sequence. The first battery pack may be connected to the battery cabinet whose address is 0X00, and the other three battery packs may be connected to the battery cabinets with the addresses 0X01, 0X02, 0X03. In addition, the identifiers may be sorted according to an ascending order of the identifiers. In such case, the sorted result of the first battery pack may be 0X00 -- 0X00, 0X01, 0X02, 0X03, and the sorted result of the battery pack in the battery cabinet with the address 0X01 may be 0X01 -- 0X00, 0X01, 0X02 and 0X03, and so on.

In block 103, The first battery pack, using the sorted result, identifies a master battery pack and slave battery packs among the first battery pack and the other battery packs. For example, the first battery pack may, using the sorted result and in accordance with a designated identification rule, identify a master battery pack and slave battery packs among the first battery pack and the other battery packs. In one embodiment of the identification rule, the first battery pack, using the sorted result, may identify the battery pack with the largest identifier as a master battery pack, and each of the other battery packs as a slave battery pack. In another embodiment, the first battery pack, using the sorted result, may identify the battery pack with the smallest identifier as a master battery pack, and each of the other battery packs as a slave battery pack.

It is understood that while only two identification rules have been described in one or more embodiments of the present application, other identification rules may be adopted in accordance with the requirements of different power cabinets. Therefore, the identification rules are not limited to the two identification rules provided in the embodiments of the present application.

In one embodiment, the first battery pack may compare its own identifier with the identifier of the master battery pack identified from the sorted result. If the identifier of the first battery pack is the same as that of the master battery pack, the first battery package is the master battery pack. Correspondingly, one of the other battery packs may compare its own identifier with the identifiers of the one or more slave battery packs identified from the sorted result. If the identifier of one of the other battery packs is the same as that of one of the slave battery packs, such one of the other battery pack is the slave battery pack.

For example, there may be four battery cabinets provided in a power cabinet. The addresses of the battery cabinet may be 0X00, 0X01, 0X02, and 0X03 in sequence. The first battery pack may be connected to the battery cabinet whose address is 0X00, and the other three battery packs may be connected to the battery cabinets with the addresses 0X01, 0X02, and 0X03, in that order. The sorting rule may sort the identifiers of the battery packs according to an ascending order of the identifiers, and the identification rule may select the battery pack with the smallest identifier as the master battery pack. In such case, the sorted result in the first battery pack may be 0X00 -- 0X00, 0X01, 0X02, and 0X03. Since the identifier of the first battery pack is the smallest, the identification rule may determine that the first battery pack is the master battery pack. In addition, the sorted result of the other battery pack in the battery pack cabinet with the address 0X01 may be 0X01-- 0X00, 0X01, 0X02, 0X03. Accordingly, the identification rule may determine that such other battery pack is a slave battery pack, and so on.

In one or more embodiment of the present application, once one battery pack is identified as the master battery pack, all other battery packs are identified as the slave battery packs. In another embodiment of the present application, after one battery pack is identified as the master battery pack, when a new battery pack is added, the new battery pack may be identified as a slave battery pack.

In one or more embodiments of the present application, the master battery pack may control the operation of the slave battery packs, as well as communicate with one or more external systems via the communication bus. In one embodiment, if only one battery pack is connected to a power cabinet, after the battery pack obtains its identifier and if/when the battery pack does not obtain the identifier of another battery pack via the communication bus, the first battery pack may identify itself as the master battery pack and accordingly may operate independently. In one embodiment, the identifier of the first battery pack and the identifiers of each of the other battery packs are each a unique address. In another embodiment, the identifier of the first battery pack and the identifiers of each of the other battery packs are each a unique serial number.

In one or more embodiments of the present application, a device may be configured to execute the blocks 101 to 103 to identify a master battery pack and the slave battery packs. The device may be located in the battery pack. In other embodiments of the present application, the device may be located in the battery cabinet, in the power cabinet, or may be external to the power cabinet and may communicate with the battery cabinets through the communication bus.

Embodiments of the present application provide a method for identifying a master and slave battery packs. After a first battery pack is connected to a battery cabinet, the first battery pack may obtain its own identifier. When the first battery pack obtains identifiers of the other battery packs connected to the other battery cabinets through a communication bus, the first battery pack may sort the identifiers of all the battery packs. The first battery may, using the sorted result of the identifiers of all the battery packs, identify a master battery pack and the slave battery packs among the first battery pack and the other battery packs. In one embodiment, if/when the first battery pack does not obtain the identifiers of any other battery packs from the other battery cabinets through the communication bus, the first battery pack may identify itself as the master battery pack. According to the technical solution provided in the embodiments of the present application, each of the battery packs connected to their respective battery cabinets is able to, according to the respective identifiers of the battery packs, automatically identify a master battery pack and one or more slave battery packs. Because a user is not required to manually configure the battery packs one by one, the complexity of the operation is reduced, and the configuration efficiency is improved. In this way, embodiments of the present application solve the shortcoming associated with the existing technology that requires a user to manually configure the battery packs one by one, thereby avoiding the complicated and time-consuming configuration process and the resulting low configuration efficiency.

### Embodiment II

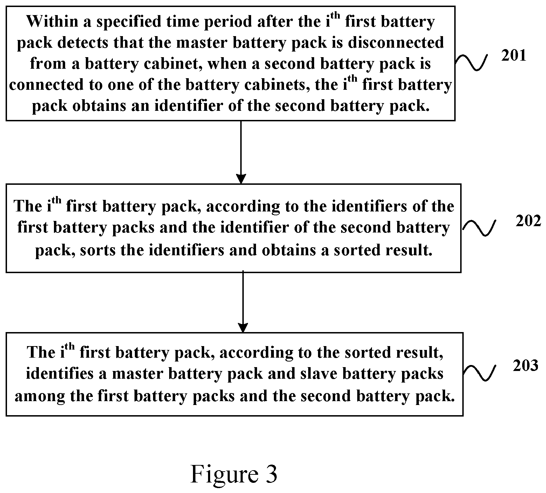

Figure 3 is an exemplary flow chart of a second method for identifying a master battery pack and slave battery packs provided by one or more embodiments of the present application. As shown in Figures 2 and 3, the method for identifying the master battery pack and the slave battery packs includes the steps or blocks described herein. In Figure 3, the plurality of battery packs in the power cabinet are referred to as the first battery packs. An i^{th} battery pack of the plurality of battery packs is referred to as the i^{th} first battery pack.

In block 201, within a specified time period after the i^{th} first battery pack detects that the master battery pack is disconnected from a battery cabinet, if/when a second battery pack is connected to one of the battery cabinets, the i^{th} first battery pack obtains an identifier of the second battery pack. In one embodiment, the second battery pack may be connected to the same or a different battery cabinet from which the master battery pack was disconnected.

During operation of the power cabinet, the battery cabinets in a power cabinet may be reconfigured to meet changing demands. For example, it may be desirable to increase or to decrease the number of battery cabinets. In another example, when a battery pack connected to one of the battery cabinets in the power cabinet fails, the failed battery pack may need to be removed from the battery cabinet.

Therefore, in one or more embodiments of the present application, when a battery pack needs to be removed from the battery cabinet, the battery pack may send a broadcast message through the communication bus to notify all the other battery packs that the battery pack will be removed from the battery cabinet. The battery pack to be removed may be any one of the battery packs, for example, a j^{th} battery pack of the first battery packs, where j ranges from 1 to N, where N is a positive integer and N refers to the total number of battery packs in the power cabinet.

When a battery pack such as the master battery pack is removed from a power cabinet, in order to maintain the operation of the power cabinet, a new master battery pack may need to be identified to control the operation of the entire power cabinet. Therefore, in one or more embodiments of the present application, a specified time period may be set to indicate the longest time that the power cabinet may continue to operate in its current configuration. If no new battery pack is added within the specified time period, the power cabinet or the battery cabinets may select one battery pack among all of the battery packs currently in the power cabinet to be the new master battery pack.

If a new battery pack (e.g., the second battery pack) is added within the specified time period, and after the newly added second battery pack is connected to the battery cabinet, the second battery pack may obtain its own identifier. The second battery pack may broadcast a message through the communication bus to inform the other battery packs of its own identifier. For example, each of the first battery packs, including the i^{th} first battery pack, may obtain the identifier of the second battery pack via the communication bus. In one embodiment, the identifiers of the first battery packs and the identifier of the second battery pack are each a unique address code. In another embodiment, the identifiers of the first battery packs and the identifier of the second battery pack are each a unique serial number. For a detailed description or explanation of the identifiers of the battery packs, references may be made to the description accompanying block 101 in Embodiment I, and the details of which will not be repeated herein.

For example, if there are six battery cabinets in a power cabinet, the addresses of these battery cabinets may be 0X00, 0X01, 0X02, 0X03, 0X04, and 0X05. Each of the addresses may be used to identify a battery pack. In this example, the specified time period, which indicates the longest time period that the power cabinet may continue to operate in the current configuration after the master battery pack is removed, may be set to 10 seconds. In this case, 5 seconds after the battery pack identified by address 0X00 is removed from the battery cabinet, a new battery pack may be connected to the battery cabinet with the address 0X00. The new battery pack may send a broadcast message to the other battery packs through the communication bus to inform them of its address code.

In block 202, the i^{th} first battery pack, according to the identifiers of the first battery packs and the identifier of the newly added second battery pack, sorts the identifiers and obtains a sorted result. For a detailed description of how the i^{th} first battery pack may sort the identifiers in block 202, references may be made to the description accompanying block 102 in Embodiment I, and the details of which will not be repeated herein.

In block 203, the i^{th} first battery pack, according to the sorted result, identifies a master battery pack and slave battery packs among the first battery packs and the second battery pack. For a detailed description of how the i^{th} first battery pack may identify a master battery pack and slave battery packs in block 203, references may be made to the description accompanying step 103 in Embodiment I, and the details of which will not be repeated herein. In one embodiment of the present application, in the situation where a new second battery pack is not added to the power cabinet within the specified time period in block 201, the i^{th} first battery pack may identify a new master battery pack and new slave battery packs according to the last sorted result.

In one embodiment, the i^{th} first battery pack in block 203, according to the last sorted result, may select the battery pack with the largest identifier as the master battery pack, and each of the other battery packs as the slave battery packs. In one embodiment, the i^{th} first battery pack, according to the last sorted result, may select the battery pack with the smallest identifier as the master battery pack, and each of the other battery packs as the slave battery packs.

In one or more embodiments of the present application, it is understood that the last sorted result of the identifiers was determined by the last designated sorting rule. For example, suppose the last designated sorting rule was for the first i^{th} battery pack to sort the identifiers according to an ascending order of the identifiers, and to select the battery pack with the largest identifier as the master battery pack, and to select the other battery packs as the slave battery packs. When the master battery pack is removed, the i^{th} battery pack may identify a new master battery pack and new slave battery packs using the last designated sorting rule by selecting the battery pack with the largest identifier, excluding the removed master battery pack, as the new master battery pack, and selecting the other battery packs as the new slave battery packs.

In another example, suppose the last designated sorting rule was for the i^{th} first battery pack to sort the identifiers according to a descending order of the identifiers, and to select the battery pack with the largest identifier as the master battery pack, and to select the other battery packs as the slave battery packs. When the master battery pack is removed, the i^{th} battery pack may identify the new master battery pack and new slave battery packs using the last designated sorting rule by selecting the battery pack with the largest identifier, excluding the removed master battery pack, as the new master battery pack, and selecting the other battery packs as the new slave battery packs.

In another example, suppose the last designated sorting rule was for the i^{th} first battery pack to sort the identifiers according to an ascending order of the identifiers, and to select the battery pack with the smallest identifier as the master battery pack, and to select the other battery packs as the slave battery packs. When the master battery pack is removed, the i^{th} battery pack may identify the new master battery pack and new slave battery packs using the last designated sorting rule by selecting the battery pack with the smallest identifier, excluding the removed master battery pack, as the new master battery pack, and selecting the other battery packs as the new slave battery packs.

In another example, suppose the last designated sorting rule was for the i^{th} first battery pack to sort the identifiers according to a descending order of the identifiers, and to select the battery pack with the smallest identifier as the master battery pack, and to select the other battery packs as the slave battery packs. When the master battery pack is removed, the i^{th} battery pack may identify the new master battery pack and new slave battery packs using the last designated sorting rule by selecting the battery pack with the smallest identifier, excluding the removed master battery pack, as the new master battery pack, and selecting the other battery packs as the new slave battery packs.

For example, if there are six battery cabinets in a power cabinet, the addresses of these battery cabinets may be 0X00, 0X01, 0X02, 0X03, 0X04, and 0X05. Each of the addresses may be used to identify a battery pack. In this example, according to an ascending order of the identifiers, the master battery pack is the battery pack identified by the address of 0X00. The specified time period, which indicates the longest time period that the power cabinet may continue to operate in the current configuration after the master battery pack is removed, may be set to 10 seconds. In this case, after the master battery pack identified by the address 0X00 is removed from the battery cabinet, no new battery pack is connected to the battery cabinet with the address 0X00. Accordingly, 10 seconds after the removal of the master battery pack, the battery pack identified by the address 0X01 will be selected as the new master battery pack, and the other battery packs selected as the slave battery packs.

Embodiments of the present application provide a method for identifying a master and slave battery packs. After a first battery pack (e.g., the i^{th} first battery pack) in the power cabinet detects that the master battery pack is removed from the battery cabinet, the first battery pack may determine whether a new battery pack (e.g., the second battery pack) is connected to the battery cabinet within a specified time period. When a new battery pack is connected to the battery cabinet within the specified time period, the first battery pack may sort the identifiers of all battery packs including the new battery pack, and may identify a new master battery pack and new slave battery packs according to the sorted result. When no new battery pack is connected to the battery cabinet within the specified time period, the first battery pack may identify the new master battery pack and the new slave battery packs according to the last sorted result of the identifiers. According to the technical solution provided in the embodiments of the present application, each of the battery packs connected to their respective battery cabinet is able to automatically identify a master and one or more slave battery packs according to the identifiers of the battery packs. The method disclosed does not require a user to manually configure the battery packs one by one. Thus, the complexity of the operation is reduced, and the efficiency of configuration is improved. In this way, embodiments of the present application solve the shortcomings in the existing technology of requiring a user to manually configure the battery packs one by one, thereby avoiding the complicated and time-consuming configuration process and the resulting low configuration efficiency.

### Embodiment III

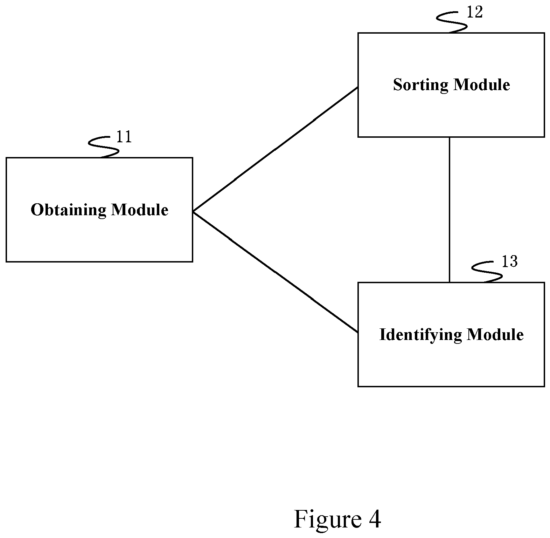

Figure 4 is a schematic view of the structure of a device configured to practice the method of the embodiment I for identifying a master battery pack and slave battery packs according to one or more embodiments of the present application. As shown in Figure 4, the device for identifying a master battery pack and slave battery packs in this embodiment may be included in the first battery pack. The device may include: an obtaining module 11, a sorting module 12 and an identifying module 13.

The obtaining module 11 is configured, after a first battery pack is connected to a battery cabinet, to obtain an identifier of the first battery pack, and to obtain the identifiers of other battery packs in the battery cabinet through a communication bus, where the number of the other battery packs is N, and N is a positive integer.

The sorting module 12 is configured to sort the identifier of the first battery pack and the identifier of each of the other battery packs obtained by the obtaining module 11 to generate a sorted result.

The identifying module 13 is configured, according to the sorted result generated by the sorting module 12, to identify a master battery pack and slave battery packs among the first battery pack and the other battery packs.

In one embodiment, the identifier of the first battery pack and the identifier of each of a second battery pack is a unique address. In one embodiment, the identifier of the first battery pack and the identifier of each of a second battery pack is a unique serial number.

In one embodiment, the sorting module 12 is specifically configured to sort the identifiers according to an ascending order of the identifiers. In one embodiment, the sorting module 12 is configured to sort the identifiers according to a descending order of the identifiers.

In one embodiment, the identifying module 13 is specifically configured by the first battery pack, according to the sorted result, to identify the battery pack with the largest identifier as a master battery pack, and to identify each of the other battery packs as a slave battery pack. In one embodiment, the identifying module 13 is configured by the first battery pack, according to the sorted result, to identify the battery pack with the smallest identifier as a master battery pack, and to identify each of the other battery packs as a slave battery pack.

In addition, the device for identifying a master battery pack and slave battery packs in one embodiment of the application may be included in a battery pack. The obtaining module 11 is further configured, after a battery pack is connected to the battery pack cabinet, to obtain the identifier of the first battery pack.

The identifying module 13 is configured, after a first battery pack is connected to the battery pack cabinet and if/when no identifier of any other battery pack is obtained through the communication bus, to identify the first battery pack itself as the master battery pack.

In one embodiment, the identifier of the first battery pack and the identifier of each of the other battery packs is a unique address code. In one embodiment, the identifier of the first battery pack and the identifier of each of the other battery packs is a unique serial number. The device in one embodiment of the present application may be configured to practice the technical solution of the method disclosed in the embodiment shown in Figure 1, and because the implementation mechanisms and technical effects are similar, the details of which will not be repeated herein.

### Embodiment IV

In the structure of the device shown in Figure 4, in one embodiment of the application, the obtaining module 11 is further configured, after detecting that the master battery pack is disconnected from the battery cabinet, and if/when within a specified time period a new second battery pack is connected to the battery cabinet, to obtain the identifier of the second battery pack, where i ranges from 1 to N, where N is a positive integer, and N is the total number of battery packs in the battery cabinet.

The sorting module 12 is further configured to sort the identifiers of the first battery packs and the identifier of the second battery packs to obtain a sorted result.

The identifying module 13 is further configured, according to the sorted result generated by the sorting module, to identify a master battery pack and slave battery packs among the first battery packs and the second battery pack.

In one embodiment, the identifiers of each of the first battery packs and the identifier of the second battery pack is a unique address. In one embodiment, the identifiers of each of the first battery packs and the identifier of the second battery pack is a unique serial number.

In one embodiment, the identifying module 13 may be further configured, after detecting that the master battery pack is disconnected from the battery cabinet, and if/when no new second battery pack is connected to the battery cabinet within a specified time period, to identify a new master battery pack and new slave battery packs according to the last sorted result of the identifiers.

In one embodiment, the identifying module 13 may be configured, according to the last sorted result, to select the battery pack with the largest identifier, excluding the removed master battery pack, as the new master battery pack and each of the other battery packs as a slave battery pack. In one embodiment, the identifying module may be configured, according to the last sorted result, to select the battery pack with the smallest identifier, excluding the removed master battery pack, as the new master battery pack and each of the other battery packs as a slave battery pack.

The device in this embodiment may be configured to practice the technical solution of the method disclosed in the embodiment shown in Figure 3, and because the implementation mechanisms and technical effects are similar, the details of which will not be repeated herein.

Functional units described as separate components in one or more embodiments of the present application may be integrated into one processing unit, or may not be physically separate. Conversely, components displayed as one unit may or may not be located in one physical unit. A functional unit or an integrated unit may be implemented in hardware, software, or any combination of hardware and software.

It is understood to a person of ordinary skill in the art that all or part of the steps of the methods described in one or more embodiments of the application may be implemented in hardware configured to execute program instructions. The program instructions may be stored in a computer readable storage medium. When the program instructions are executed, the steps of the methods described in the embodiments may be performed. The computer readable storage medium may include various media capable of storing program codes, such as a ROM, a RAM, a magnetic disk, an optical disc, etc.

Finally, it is understood that the foregoing embodiments are presented to facilitate an understanding of the technical solutions of the present application, and are not intended to limit the present application. While the present application is described in detail with reference to the foregoing embodiments, it is understood by a person of ordinary skill in the art that modifications or changes to the foregoing embodiments may be made to part or all of the technical features. The invention is defined by the appended claims.

## Claims

1. A method for identifying a master battery pack, comprising:
obtaining, by a first battery pack, an identifier of the first battery pack after the first battery pack is connected to a battery cabinet of a power cabinet;
obtaining, by the first battery pack, identifiers of one or more other battery packs in their respective battery cabinets of the power cabinet through a communication bus, wherein a number of the one or more other battery packs plus the first battery pack is N, wherein N is a positive integer;
sorting, by the first battery pack, the identifier of the first battery pack and the identifiers of the one or more other battery packs to obtain a sorted result;
identifying, by the first battery pack, the master battery pack and one or more slave battery packs among the first battery pack and the one or more other battery packs according to the sorted result;
**characterized by**:
detecting, by the first battery pack, that the master battery pack is removed from its battery cabinet;
detecting, by the first battery pack, that a new battery pack is not connected to any of the battery cabinets within a time period after the master battery pack is removed, wherein the time period indicates a longest time that the power cabinet continues to operate in its current configuration after the master battery pack is removed; and
identifying, by the first battery pack, a new master battery pack and new slave battery packs according to the sorted result when the new battery pack is not connected to any of the battery cabinets within the time period.

2. The method of claim 1, wherein the master battery pack controls operations of the one or more slave battery packs.

3. The method according to claim 1 or 2, wherein the identifier of the first battery pack and the identifiers of the one or more other battery packs are each a unique address, or the identifier of the first battery pack and the identifiers of the one or more other battery packs are each a unique serial number.

4. The method according to any of claims 1 to 3, wherein said sorting, by the first battery pack, the identifier of the first battery pack and the identifiers of each of the one or more other battery packs, comprises:
sorting, by the first battery pack, all of the identifiers according to an ascending order of all of the identifiers to obtain the sorted result; or
sorting, by the first battery pack, all of the identifiers according to a descending order of all of the identifiers to obtain the sorted result.

5. The method according to any of claims 1 to 4, wherein said identifying, by the first battery pack, the master battery pack and the one or more slave battery packs among the first battery pack and the one or more other battery packs, comprises:
identifying, by the first battery pack, a battery pack with a largest identifier as the master battery pack, and other battery packs as the one or more slave battery packs according to the sorted result; or
identifying, by the first battery pack, a battery pack with a smallest identifier as the master battery pack, and other battery packs as the one or more slave battery packs according to the sorted result.

6. The method according to claim 1, wherein said identifying, by the first battery pack, the new master battery pack and the new slave battery packs according to the sorted result, comprises:
identifying, by the first battery pack, a battery pack with a largest identifier excluding the removed master battery pack as the new master battery pack, and other battery packs as the new slave battery packs according to the sorted result; or
identifying, by the first battery pack, a battery pack with a smallest identifier excluding the removed master battery pack as the new master battery pack, and other battery packs as the new slave battery packs according to the sorted result.

7. A method for identifying a new master battery pack and new slave battery packs, comprising and **characterized by**:
detecting, by an i^{th} one of a plurality of first battery packs, that a master battery pack is removed from a battery cabinet of a power cabinet of the master battery pack, wherein i ranges from 1 to N, wherein N is a positive integer, wherein N is a total number of the first battery packs connected to their respective battery cabinets of the power cabinet, and wherein the first battery packs have respective identifiers;
detecting, by the i^{th} one of the first battery packs, that a new battery pack is connected to one of the battery cabinets within a time period after the master battery pack is removed, wherein the time period indicates a longest time that the power cabinet continues to operate in its current configuration after the master battery pack is removed;
obtaining, by the i^{th} one of the first battery packs, an identifier of the new battery pack;
sorting, by the i^{th} one of the first battery packs, the identifiers of the first battery packs and the identifier of the new battery pack to obtain a sorted result; and
identifying, by the i^{th} one of the first battery packs, the new master battery pack and the new slave battery packs among the first battery packs and the new battery pack according to the sorted result.

8. The method according to claim 7, wherein the identifiers of the first battery packs and the identifier of the new battery pack are each a unique address, or the identifiers of the first battery packs and the identifier of the new battery pack are each a unique serial number.

9. The method according to claim 7 or 8, wherein said identifying, by the i^{th} one of the first battery packs, the new master battery pack and the new slave battery packs among the first battery packs and the new battery pack, comprises:
identifying, by the i^{th} one of the first battery packs, a battery pack with a largest identifier as the new master battery pack, and other battery packs as the new slave battery packs according to the sorted result; or
identifying, by the i^{th} one of the first battery packs, a battery pack with a smallest identifier as the new master battery pack, and other battery packs as the new slave battery packs according to the sorted result.

10. A device adapted to be arranged in a first battery pack, comprising:
an obtaining module configured to obtain an identifier of the first battery pack after the first battery pack is connected to a battery cabinet of a power cabinet, wherein the obtaining module (11) is further configured to obtain identifiers of one or more other battery packs in their respective battery cabinets of the power cabinet through a communication bus, wherein a number of the one or more other battery packs plus the first battery pack is N, wherein N is a positive integer;
a sorting module (12) configured to sort the identifier of the first battery pack and the identifiers of the one or more other battery packs to obtain a sorted result; and
an identifying module (13) configured to identify the master battery pack and one or more slave battery packs among the first battery pack and the one or more other battery packs according to the sorted result;
**characterized in that** the identifying module (13) is further configured to:
detect that the master battery pack is removed from its battery cabinet;
detect that a new battery pack is not connected to any of the battery cabinets within a time period after the master battery pack is removed, wherein the time period indicates a longest time that the power cabinet continues to operate in its current configuration after the master battery pack is removed; and
identify a new master battery pack and new slave battery packs according to the sorted result when the new battery pack is not connected to any of the battery cabinets within the time period.

11. The device according to claim 10, wherein the identifier of the first battery pack and the identifiers of the one or more other battery packs are each a unique address, or the identifier of the first battery pack and the identifiers of the one or more other battery packs are each a unique serial number.

12. The device according to claim 10 or 11, wherein the sorting module is further configured to sort all of the identifiers according to an ascending order of all of the identifiers to obtain the sorted result, or to sort all of the identifiers according to a descending order of all of the identifiers to obtain the sorted result.

13. The device according to any of claims 10 to 12, wherein the identifying module is further configured to identify a battery pack with a largest identifier as the master battery pack, and other battery packs as the one or more slave battery packs according to the sorted result, or to identify a battery pack with a smallest identifier as the master battery pack, and other battery packs as the one or more slave battery packs according to the sorted result.

14. The device according to claim 10, wherein the identifying module (13) is further configured to:
identify a battery pack with a largest identifier excluding the removed master battery pack as the new master battery pack, and other battery packs as the new slave battery packs according to the sorted result, or
identify a battery pack with a smallest identifier excluding the removed master battery pack as the new master battery pack, and other battery packs as the new slave battery packs according to the sorted result.

15. The device according to any of claims 10 to 14, wherein the identifying module (13) is further configured to:
detect that the new master battery pack is removed from the battery cabinet of the new master battery pack;
detect that another new battery pack is connected to one of the battery cabinets within the time period after the new master battery pack is removed; and
obtain an identifier of the another new battery pack,
and wherein the sorting module (12) is further configured to sort all of the identifiers including the identifier of the another new battery pack to obtain another sorted result, and wherein the identifying module (13) is further configured to identify another new master battery pack and new slave battery packs among all of the battery packs including the another new battery pack according to the another sorted result.

16. The device according to claim 15, wherein the identifiers of all of the battery packs including the identifier of the another new battery pack are each a unique address, or the identifiers of all of the battery packs including the identifier of the another new battery pack are each a unique serial number.

## Patentansprüche

1. Verfahren zum Identifizieren eines Master-Batteriepacks, aufweisend:
Erhalten, durch einen ersten Batteriepack, einer Kennung des ersten Batteriepacks, nachdem der erste Batteriepack mit einem Batterieschrank eines Leistungsschranks verbunden ist;
Erhalten, durch den ersten Batteriepack, Kennungen von einem oder mehreren anderen Batteriepacks in ihren jeweiligen Batterieschränken des Leistungsschranks über einen Kommunikationsbus, wobei eine Anzahl des einen oder der mehreren anderen Batteriepacks plus des ersten Batteriepack N ist, wobei N eine positive ganze Zahl ist;
Sortieren, durch den ersten Batteriepack, der Kennung des ersten Batteriepacks und der Kennungen des einen oder der mehreren anderen Batteriepacks, um ein sortiertes Ergebnis zu erhalten;
Identifizieren, durch den ersten Batteriepack, des Master-Batteriepacks und eines oder mehrerer Slave-Batteriepacks unter dem ersten Batteriepack und dem einen oder den mehreren anderen Batteriepacks gemäß dem sortierten Ergebnis;
**gekennzeichnet durch**,
Erfassen durch den ersten Batteriepack, dass der Master-Batteriepack aus seinem Batterieschrank entfernt wird;
Erfassen, durch den ersten Batteriepack, dass ein neuer Batteriepack innerhalb eines Zeitraums nach dem Entfernen des Master-Batteriepacks an keinen der Batterieschränke angeschlossen ist, wobei der Zeitraum eine längste Zeit angibt, dass der Leistungsschrank in seiner aktuellen Konfiguration weiter arbeitet, nachdem der Master-Batteriepack entfernt ist; und
Identifizieren, durch den ersten Batteriepack, eines neuen Master-Batteriepacks und neuer Slave-Batteriepacks gemäß dem sortierten Ergebnis, wenn der neue Batteriepack innerhalb des Zeitraums nicht an einem der Batterieschränke angeschlossen wird.

2. Verfahren nach Anspruch 1, wobei der Master-Batteriepack den Betrieb des einen oder der mehreren Slave-Batteriepacks steuert.

3. Verfahren nach Anspruch 1 oder 2, wobei die Kennung des ersten Batteriepacks und die Kennungen des einen oder der mehreren anderen Batteriepacks jeweils eine eindeutige Adresse ist, oder die Kennung des ersten Batteriepacks und die Kennungen des einen oder der mehreren anderen Batteriepacks jeweils eine eindeutige Seriennummer ist.

4. Verfahren nach einem der Ansprüche 1 bis 3, wobei das Sortieren, durch den ersten Batteriepack, der Kennung des ersten Batteriepacks und den Kennungen jedes der einen oder mehreren anderen Batteriepacks aufweist:
Sortieren, durch den ersten Batteriepack, aller Kennungen gemäß einer aufsteigenden Ordnung aller Kennungen, um das sortierte Ergebnis zu erhalten. oder Sortieren, durch den ersten Batteriepack, aller Kennungen gemäß einer absteigenden Ordnung aller Kennungen, um das sortierte Ergebnis zu erhalten.

5. Verfahren nach einem der Ansprüche 1 bis 4, wobei das Identifizieren, durch den ersten Batteriepack, des Master-Batteriepacks und des einen oder der mehreren Slave-Batteriepacks unter dem ersten Batteriepack und dem einen oder den mehreren anderen Batteriepacks aufweist:
Identifizieren, durch den ersten Batteriepack, eines Batteriepack mit einer größten Kennung als Master-Batteriepack, und anderer Batteriepacks als den einen oder die mehreren Slave-Batteriepacks gemäß dem sortierten Ergebnis; oder
Identifizieren, durch den ersten Batteriepack, eines Batteriepacks mit einer kleinsten Kennung als Master-Batteriepack, und anderer Batteriepacks als den einen oder die mehreren Slave-Batteriepacks gemäß dem sortierten Ergebnis.

6. Verfahren nach Anspruch 1, wobei das Identifizieren, durch den ersten Batteriepack, des neuen Master-Batteriepacks und der neuen Slave-Batteriepacks gemäß dem sortierten Ergebnis aufweist:
Identifizieren, durch den ersten Batteriepack, eines Batteriepacks mit einer größten Kennung ohne den entfernten Master-Batteriepacks als den neuen Master-Batteriepack, und anderer Batteriepakete als die neuen Slave-Batteriepacks gemäß dem sortierten Ergebnis; oder
Identifizieren, durch den ersten Batteriepack, eines Batteriepacks mit einer kleinsten Kennung ohne den entfernten Master-Batteriepacks als den neuen Master-Batteriepack, und anderer Batteriepakete als die neuen Slave-Batteriepacks gemäß dem sortierten Ergebnis

7. Verfahren zum Identifizieren eines neuen Master-Batteriepacks und neuer Slave-Batteriepacks, aufweisend und **gekennzeichnet durch**:
Erfassen, durch einen i-ten von mehreren ersten Batteriepacks, dass ein Master-Batteriepack aus einem Batterieschrank des Leistungsschranks des Master-Batteriepacks entfernt wird, wobei i im Bereich von 1 bis N liegt, wobei N eine positive ganze Zahl ist, wobei N eine Gesamtzahl der ersten Batteriepacks ist, die mit ihren jeweiligen Batterieschränken des Leistungsschranks verbunden sind, und wobei die ersten Batteriepacks entsprechende Kennungen haben;
Erfassen, durch den i-ten der ersten Batteriepacks, dass ein neuer Batteriepack innerhalb eines Zeitraums nach dem Entfernen des Master-Batteriepacks mit einem der Batterieschränke verbunden wird; wobei der Zeitraum eine längste Zeit angibt, dass der Leistungsschrank in seiner aktuellen Konfiguration weiter arbeitet, nachdem der Master-Batteriepack entfernt ist;
Erhalten, durch den i-ten der ersten Batteriepacks, einer Kennung des neuen Batteriepacks;
Sortieren, durch den i-ten der ersten Batteriepacks, der Kennungen der ersten Batteriepacks und der Kennung des neuen Batteriepacks, um ein sortiertes Ergebnis zu erhalten; und
Identifizieren, durch den i-ten der ersten Batteriepacks, des neuen Master-Batteriepacks und der neuen Slave-Batteriepacks unter den ersten Batteriepacks und des neuen Batteriepacks gemäß dem sortierten Ergebnis.

8. Verfahren nach Anspruch 7, wobei die Kennungen der ersten Batteriepacks und die Kennung des neuen Batteriepacks jeweils eine eindeutige Adresse sind, oder die Kennungen der ersten Batteriepacks und die Kennung des Batteriepacks jeweils eine eindeutige Seriennummer sind.

9. Verfahren nach einem der Ansprüche 7 oder 8, wobei das Identifizieren, durch den i-ten der ersten Batteriepacks, des neuen Master-Batteriepacks und der neuen Slave-Batteriepacks unter den ersten Batteriepacks und dem neuen Batteriepack aufweist:
Identifizieren, durch den i-ten der ersten Batteriepacks, eines Batteriepack mit einer größten Kennung als den neuen Master-Batteriepack, und anderer Batteriepacks als die neuen Slave-Batteriepacks gemäß dem sortierten Ergebnis; oder
Identifizieren, durch den i-ten der ersten Batteriepack, eines Batteriepacks mit einer kleinsten Kennung als den neuen Master-Batteriepack, und anderer Batteriepacks als die neuen Slave-Batteriepacks gemäß dem sortierten Ergebnis.

10. Vorrichtung, die ausgebildet ist, um in einem ersten Batteriepack angeordnet zu werden, aufweisend:
ein Erhalte-Modul, das konfiguriert ist, um eine Kennung des ersten Batteriepacks zu erhalten, nachdem der erste Batteriepack mit einem Batterieschrank eines Leistungsschranks verbunden ist;
wobei das Erhalte-Modul (11) weiterhin konfiguriert ist, um Kennungen von einem oder mehreren anderen Batteriepacks in ihren jeweiligen Batterieschränken des Leistungsschranks über einen Kommunikationsbus zu erhalten, wobei eine Anzahl des einen oder der mehreren anderen Batteriepacks plus des ersten Batteriepack N ist, wobei N eine positive ganze Zahl ist;
ein Sortier-Modul (12), das konfiguriert ist, um die Kennung des ersten Batteriepacks und die Kennungen des einen oder der mehreren anderen Batteriepacks zu sortieren, um ein sortiertes Ergebnis zu erhalten; und
ein Identifizier-Modul (13), das konfiguriert ist, um den Master-Batteriepack und eines oder mehrere Slave-Batteriepacks unter dem ersten Batteriepack und dem einen oder den mehreren anderen Batteriepacks gemäß dem sortierten Ergebnis zu identifizieren;
**dadurch gekennzeichnet,**
**dass** das Identifizier-Modul (13) weiterhin konfiguriert ist, um zu erfassen, dass der Master-Batteriepack aus seinem Batterieschrank entfernt wird;
um zu erfassen, dass ein neuer Batteriepack innerhalb eines Zeitraums nach dem Entfernen des Master-Batteriepacks an keinen der Batterieschränke angeschlossen ist, wobei der Zeitraum eine längste Zeit angibt, dass der Leistungsschrank in seiner aktuellen Konfiguration weiter arbeitet, nachdem der Master-Batteriepack entfernt ist; und
um einen neuen Master-Batteriepacks und neue Slave-Batteriepacks gemäß dem sortierten Ergebnis zu identifizieren, wenn der neue Batteriepack innerhalb des Zeitraums nicht an einem der Batterieschränke angeschlossen wird.

11. Vorrichtung nach Anspruch 10, wobei die Kennung des ersten Batteriepacks und die Kennungen des einen oder der mehreren anderen Batteriepacks jeweils eine eindeutige Adresse ist, oder die Kennung des ersten Batteriepacks und die Kennungen des einen oder der mehreren anderen Batteriepacks jeweils eine eindeutige Seriennummer ist.

12. Vorrichtung nach Anspruch 10 oder 11, wobei das Sortier-Modul weiterhin konfiguriert ist zum Sortieren aller Kennungen gemäß einer aufsteigenden Ordnung aller Kennungen, um das sortierte Ergebnis zu erhalten. oder zum Sortieren aller Kennungen gemäß einer absteigenden Ordnung aller Kennungen, um das sortierte Ergebnis zu erhalten.

13. Vorrichtung nach einem der Ansprüche 10 bis 12, wobei das Identifizier-Modul weiterhin konfiguriert ist zum Identifizieren eines Batteriepack mit einer größten Kennung als den Master-Batteriepack, und anderer Batteriepacks als den einen oder die mehreren Slave-Batteriepacks gemäß dem sortierten Ergebnis; oder zum Identifizieren eines Batteriepacks mit einer kleinsten Kennung als den Master-Batteriepack, und anderer Batteriepacks als den einen oder die mehreren Slave-Batteriepacks gemäß dem sortierten Ergebnis.

14. Vorrichtung nach Anspruch 10, wobei das Identifizier-Modul (13) weiterhin konfiguriert ist zum Identifizieren eines Batteriepacks mit einer größten Kennung ohne den entfernten Master-Batteriepacks als den neuen Master-Batteriepack, und anderer Batteriepakete als die neuen Slave-Batteriepacks gemäß dem sortierten Ergebnis; oder zum Identifizieren eines Batteriepacks mit einer kleinsten Kennung ohne den entfernten Master-Batteriepacks als den neuen Master-Batteriepack, und anderer Batteriepakete als die neuen Slave-Batteriepacks gemäß dem sortierten Ergebnis

15. Vorrichtung nach einem der Ansprüche 10 bis 14, wobei das Identifizier-Modul (13) weiterhin konfiguriert ist zum:
Erfassen, dass der neue Master-Batteriepack aus dem Batterieschrank des neuen Master-Batteriepacks entfernt wird;
Erfassen, dass ein anderer neuer Batteriepack innerhalb eines Zeitraums nach dem Entfernen des neuen Master-Batteriepacks mit einem der Batterieschränke verbunden wird; und
Erhalten einer Kennung des anderen neuen Batteriepacks;
und wobei das Sortier-Modul (12) weiterhin konfiguriert ist zum Sortieren aller Kennungen einschließlich der Kennung des anderen neuen Batteriepacks, um ein anderes sortiertes Ergebnis zu erhalten;
und wobei das Identifizier-Modul (13) weiterhin konfiguriert ist zum Identifizieren eines anderen neuen Master-Batteriepacks und neuer Slave-Batteriepacks unter allen Batteriepacks einschließlich des anderen neuen Batteriepacks gemäß dem sortierten Ergebnis.

16. Vorrichtung nach Anspruch 15, wobei die Kennungen aller Batteriepacks einschließlich der Kennung des anderen neuen Batteriepacks jeweils eine eindeutige Adresse sind, oder die Kennungen aller Batteriepacks einschließlich der Kennung des anderen neuen Batteriepacks jeweils eine eindeutige Seriennummer sind.

## Revendications

1. Procédé pour identifier un bloc-batterie maître, comprenant :
obtenir, par un premier bloc-batterie, un identifiant du premier bloc-batterie après que le premier bloc-batterie est connecté à une armoire pour batterie d'une armoire de puissance ;
obtenir, par le premier bloc-batterie, des identifiants d'un ou plusieurs autres blocs-batterie dans leurs armoires pour batterie respectives de l'armoire de puissance par l'intermédiaire d'un bus de communication, un nombre du ou des autres blocs-batterie plus le premier bloc-batterie étant N, N étant un nombre entier positif ;
trier, par le premier bloc-batterie, l'identifiant du premier bloc-batterie et les identifiants du ou des autres blocs-batterie pour obtenir un résultat trié ;
identifier, par le premier bloc-batterie, le bloc-batterie maître et un ou plusieurs blocs-batterie esclaves parmi le premier bloc-batterie et le ou les autres blocs-batterie en fonction du résultat trié ;
**caractérisé par** :
détecter, par le premier bloc-batterie, que le bloc-batterie maître est retiré de son armoire pour batterie ;
détecter, par le premier bloc-batterie, qu'un nouveau bloc-batterie n'est connecté à aucune des armoires pour batterie pendant une période après le retrait du bloc-batterie maître, la période indiquant une durée maximale pendant laquelle l'armoire de puissance continue de fonctionner dans sa configuration actuelle après le retrait du bloc-batterie maître ; et
identifier, par le premier bloc-batterie, un nouveau bloc-batterie maître et de nouveaux blocs-batterie esclaves en fonction du résultat trié lorsque le nouveau bloc-batterie n'est connecté à aucune des armoires pour batterie pendant la période.

2. Procédé selon la revendication 1, dans lequel le bloc-batterie maître commande les fonctionnements du ou des blocs-batterie esclaves.

3. Procédé selon la revendication 1 ou 2, dans lequel l'identifiant du premier bloc-batterie et les identifiants du ou des autres blocs-batterie sont chacun une adresse unique, ou l'identifiant du premier bloc-batterie et les identifiants du ou des autres blocs-batterie sont chacun un numéro de série unique.

4. Procédé selon l'une quelconque des revendications 1 à 3, dans lequel ledit tri, par le premier bloc-batterie, de l'identifiant du premier bloc-batterie et des identifiants de chacun du ou des autres blocs-batterie, comprend :
trier, par le premier bloc-batterie, tous les identifiants selon un ordre croissant de tous les identifiants pour obtenir le résultat trié ; ou
trier, par le premier bloc-batterie, tous les identifiants selon un ordre décroissant de tous les identifiants pour obtenir le résultat trié.

5. Procédé selon l'une quelconque des revendications 1 à 4, dans lequel ladite identification, par le premier bloc-batterie, du bloc-batterie maître et du ou des blocs-batterie esclaves parmi le premier bloc-batterie et le ou les autres blocs-batterie, comprend :
identifier, par le premier bloc-batterie, un bloc-batterie ayant l'identifiant le plus grand comme étant le bloc-batterie maître, et d'autres blocs-batterie comme étant le ou les blocs-batterie esclaves en fonction du résultat trié ; ou
identifier, par le premier bloc-batterie, un bloc-batterie ayant l'identifiant le plus petit comme étant le bloc-batterie maître, et d'autres blocs-batterie comme étant le ou les blocs-batterie esclaves en fonction du résultat trié.

6. Procédé selon la revendication 1, dans lequel ladite identification, par le premier bloc-batterie, du nouveau bloc-batterie maître et des nouveaux blocs-batterie esclaves en fonction du résultat trié, comprend :
identifier, par le premier bloc-batterie, un bloc-batterie ayant l'identifiant le plus grand à l'exception du bloc-batterie maître retiré comme étant le nouveau bloc-batterie maître, et d'autres blocs-batterie comme étant les nouveaux blocs-batterie esclaves en fonction du résultat trié ; ou
identifier, par le premier bloc-batterie, un bloc-batterie ayant l'identifiant le plus petit à l'exception du bloc-batterie maître retiré comme étant le nouveau bloc-batterie maître, et d'autres blocs-batterie comme étant les nouveaux blocs-batterie esclaves en fonction du résultat trié.

7. Procédé pour identifier un nouveau bloc-batterie maître et de nouveaux blocs-batterie esclaves, comprenant et **caractérisé par** :
détecter, par un i^{ième} bloc-batterie d'une pluralité de premiers blocs-batterie, qu'un bloc-batterie maître est retiré d'une armoire pour batterie d'une armoire de puissance du bloc-batterie maître, i étant compris dans la plage allant de 1 à N, N étant un nombre entier positif, N étant un nombre total des premiers blocs-batterie connectés à leurs armoires pour batterie respectives de l'armoire de puissance, et les premiers blocs-batterie ayant des identifiants respectifs ;
détecter, par le i^{ième} bloc-batterie des premiers blocs-batterie, qu'un nouveau bloc-batterie est connecté à l'une des armoires pour batterie pendant une période après le retrait du bloc-batterie maître, la période indiquant une durée maximale pendant laquelle l'armoire de puissance continue de fonctionner dans sa configuration actuelle après le retrait du bloc-batterie maître ;
obtenir, par le i^{ième} bloc-batterie des premiers blocs-batterie, un identifiant du nouveau bloc-batterie ;
trier, par le i^{ième} bloc-batterie des premiers blocs-batterie, les identifiants des premiers blocs-batterie et l'identifiant du nouveau bloc-batterie pour obtenir un résultat trié ; et
identifier, par le i^{ième} bloc-batterie des premiers blocs-batterie, le nouveau bloc-batterie maître et les nouveaux blocs-batterie esclaves parmi les premiers blocs-batterie et le nouveau bloc-batterie en fonction du résultat trié.

8. Procédé selon la revendication 7, dans lequel les identifiants des premiers blocs-batterie et l'identifiant du nouveau bloc-batterie sont chacun une adresse unique, ou les identifiants des premiers blocs-batterie et l'identifiant du nouveau bloc-batterie sont chacun un numéro de série unique.

9. Procédé selon la revendication 7 ou 8, dans lequel ladite identification, par le i^{ième} bloc-batterie des premiers blocs-batterie, du nouveau bloc-batterie maître et des nouveaux blocs-batterie esclaves parmi les premiers blocs-batterie et le nouveau bloc-batterie, comprend :
identifier, par le i^{ième} bloc-batterie des premiers blocs-batterie, un bloc-batterie ayant l'identifiant le plus grand comme étant le nouveau bloc-batterie maître, et d'autres blocs-batterie comme étant les nouveaux blocs-batterie esclaves en fonction du résultat trié ; ou
identifier, par le i^{ième} bloc-batterie des premiers blocs-batterie, un bloc-batterie ayant l'identifiant le plus petit comme étant le nouveau bloc-batterie maître, et d'autres blocs-batterie comme étant les nouveaux blocs-batterie esclaves en fonction du résultat trié.

10. Dispositif adapté pour être disposé dans un premier bloc-batterie, comprenant :
un module d'obtention configuré pour obtenir un identifiant du premier bloc-batterie après que le premier bloc-batterie est connecté à une armoire pour batterie d'une armoire de puissance, le module d'obtention (11) étant en outre configuré pour obtenir des identifiants d'un ou plusieurs autres blocs-batterie dans leurs armoires pour batterie respectives de l'armoire de puissance par l'intermédiaire d'un bus de communication, un nombre du ou des autres blocs-batterie plus le premier bloc-batterie étant N, N étant un nombre entier positif ;
un module de tri (12) configuré pour trier l'identifiant du premier bloc-batterie et les identifiants du ou des autres blocs-batterie pour obtenir un résultat trié ; et
un module d'identification (13) configuré pour identifier le bloc-batterie maître et un ou plusieurs blocs-batterie esclaves parmi le premier bloc-batterie et le ou les autres blocs-batterie en fonction du résultat trié ;
**caractérisé par le fait que** le module d'identification (13) est en outre configuré pour :
détecter que le bloc-batterie maître est retiré de son armoire pour batterie ;
détecter qu'un nouveau bloc-batterie n'est connecté à aucune des armoires pour batterie pendant une période après le retrait du bloc-batterie maître, la période indiquant une durée maximale pendant laquelle l'armoire de puissance continue de fonctionner dans sa configuration actuelle après le retrait du bloc-batterie maître ; et
identifier un nouveau bloc-batterie maître et de nouveaux blocs-batterie esclaves en fonction du résultat trié lorsque le nouveau bloc-batterie n'est connecté à aucune des armoires pour batterie pendant la période.

11. Dispositif selon la revendication 10, dans lequel l'identifiant du premier bloc-batterie et les identifiants du ou des autres blocs-batterie sont chacun une adresse unique, ou l'identifiant du premier bloc-batterie et les identifiants du ou des autres blocs-batterie sont chacun un numéro de série unique.

12. Dispositif selon la revendication 10 ou 11, dans lequel le module de tri est en outre configuré pour :
trier tous les identifiants selon un ordre croissant de tous les identifiants pour obtenir le résultat trié, ou trier tous les identifiants selon un ordre décroissant de tous les identifiants pour obtenir le résultat trié.

13. Dispositif selon l'une quelconque des revendications 10 à 12, dans lequel le module d'identification est en outre configuré pour identifier un bloc-batterie ayant l'identifiant le plus grand comme étant le bloc-batterie maître, et d'autres blocs-batterie comme étant le ou les blocs-batterie esclaves en fonction du résultat trié, ou pour identifier un bloc-batterie ayant l'identifiant le plus petit comme étant le bloc-batterie maître, et d'autres blocs-batterie comme étant le ou les blocs-batterie esclaves en fonction du résultat trié.

14. Dispositif selon la revendication 10, dans lequel le module d'identification (13) est en outre configuré pour :
identifier un bloc-batterie ayant l'identifiant le plus grand à l'exception du bloc-batterie maître retiré comme étant le nouveau bloc-batterie maître, et d'autres blocs-batterie comme étant les nouveaux blocs-batterie esclaves en fonction du résultat trié, ou
identifier un bloc-batterie ayant l'identifiant le plus petit à l'exception du bloc-batterie maître retiré comme étant le nouveau bloc-batterie maître, et d'autres blocs-batterie comme étant les nouveaux blocs-batterie esclaves en fonction du résultat trié.

15. Dispositif selon l'une quelconque des revendications 10 à 14, dans lequel le module d'identification (13) est en outre configuré pour :
détecter que le nouveau bloc-batterie maître est retiré de l'armoire pour batterie du nouveau bloc-batterie maître ;
détecter qu'un autre nouveau bloc-batterie est connecté à l'une des armoires pour batterie pendant la période après le retrait du nouveau bloc-batterie maître ; et
obtenir un identifiant de l'autre nouveau bloc-batterie,
et le module de tri (12) étant en outre configuré pour trier les identifiants, y compris l'identifiant de l'autre nouveau bloc-batterie, pour obtenir un autre résultat trié, et le module d'identification (13) étant en outre configuré pour identifier un autre nouveau bloc-batterie maître et de nouveaux blocs-batterie esclaves parmi tous les blocs-batterie, y compris l'autre nouveau bloc-batterie, en fonction de l'autre résultat trié.

16. Dispositif selon la revendication 15, dans lequel les identifiants de tous les blocs-batterie, y compris l'identifiant de l'autre nouveau bloc-batterie, sont chacun une adresse unique, ou les identifiants de tous les blocs-batterie, y compris l'identifiant de l'autre nouveau bloc-batterie, sont chacun un numéro de série unique.
